# EUROPÄISCHE PATENTSCHRIFT

(11) **EP 3 238 793 B1**
(45) Veröffentlichungstag und Bekanntmachung des Hinweises auf die Patenterteilung: **12.09.2018**
(21) Anmeldenummer: 16206240.0
(22) Anmeldetag: 22.12.2016
(51) Int. Cl.: A63C 5/12, C08L 75/04

(54) **SPORTGERÄT MIT EINER BEDRUCKBAREN, KRATZFESTEN UND TRANSPARENTEN OBERFLÄCHENFOLIE**
SPORTS DEVICE WITH A PRINTABLE, ABRASION-RESISTANT AND TRANSPARENT SURFACE FILM
ÉQUIPEMENT SPORTIF COMPORTANT UNE FEUILLE DE SURFACE TRANSPARENTE RÉSISTANTE AUX RAYURES ET POUVANT ÊTRE IMPRIMÉE

(30) Priorität: 26.04.2016 DE 102016005034
(43) Veröffentlichungstag der Anmeldung: 01.11.2017
(73) Patentinhaber: CPS GmbH, 83101 Rohrdorf (DE)
(72) Erfinder: Wrobel, Florian, 83026 Rosenheim (DE); Loidl, Adalbert, 83349 Palling (DE)
(74) Vertreter: Laufhütte, Dieter

(56) Entgegenhaltungen:
- AT-B1- 513 280
- US-A1- 2013 295 364

## Beschreibung

Die Erfindung betrifft ein Sportgerät mit einer TPU-basierten Oberflächenfolie, die physikalische Eigenschaften aufweist, die für eine derartige Anwendung vorteilhaft sind.

Skier sind für gewöhnlich aus mehreren Schichten aufgebaut und umfassen einen Belag, der zwischen zwei Kanten eingefasst ist. Oberhalb des Belags befinden sich ein Untergurt, ein Kern aus beispielsweise Massivholz und ein Obergurt. Die Gurte können beispielsweise aus glasfaserverstärktem Kunststoff bestehen. Oberhalb der Kante bzw. seitlich der Gurte und des Kerns befinden sich Seitenwangen, die typischerweise aus Kunststoff wie beispielsweise ABS gefertigt sind. An der Oberfläche ist die Konstruktion mit einer so genannten Oberflächenfolie abgedeckt.

Die einzelnen Schichten werden typischerweise mit z.B. Epoxidkleber verklebt und gepresst. Die Gestaltung der Skier erfolgt typischerweise durch Bedrucken der Unterseite der Oberflächenfolie, die daher möglichst farblos und durchsichtig sein sollte.

Neben der Farblosigkeit und Durchsichtigkeit muss die Folie sehr widerstandsfähig sein, da sie im Einsatz hohen Belastungen wie beispielsweise anschlagenden Kanten und anderen Spitzen Gegenständen ausgesetzt ist. Die Eigenschaften wie beispielsweise große Härte und Schlagzähigkeit müssen insbesondere auch bei tiefen Temperaturen bis deutlich unter dem Gefrierpunkt gezeigt werden (z.B. -10°C bis -40°C). Auch soll eine Wärmeformbeständigkeit bei Temperaturen von 80°C bis 140°C vorliegen. Gewisse thermoplastische Elastomere auf Urethanbasis (TPU) mit einem hohen durchschnittlichen Molekulargewicht haben Härten von >90 nach Shore A und >40 nach Shore D sowie weitere geeignete physikalische Eigenschaften und wurden daher im Stand der Technik teilweise für diese Anwendung herangezogen.

Gleichzeitig ist es aber erforderlich, dass die Druckfarbe in einem großen Temperaturspektrum fest an der Rückseite der Folie haftet, denn ansonsten kann es passieren, dass die Druckerfarbe an der Klebeschicht des Obergurtes haftet und die Oberflächenfolie von der Druckerfarbe abgezogen wird, dass also mit anderen Worten die Verbindung der Druckerfarbe zur Innenseite der Oberflächenfolie eine Schwachschicht darstellt. Der Begriff fest ist hier nicht im normalen Sinne einer Bedruckbarkeit zu verstehen, sondern die Druckerfarbe muss wirklich fest an den Folien haften können. Hier stießen Folien aus den besagten TPUs oft an ihre Grenzen, da diese zwar grundsätzlich bedruckbar waren, eine ausreichende Haftung der Druckerfarbe jedoch bei reinen TPU-Folien nur mit speziellen Primern möglich ist.

Vor diesem Hintergrund wurde im Stand der Technik ein zweischichtiger Aufbau der Oberflächenfolie vorgeschlagen, wobei diese Folien eine widerstandsfähige Außenschicht aus besagten TPUs und eine fest bedruckbare Innenschicht aus einer Mischung zwischen TPU und M-ABS (Methylmethacrylat Acrylonitril-Butadien-Styrol) aufweisen. Der Anteil an TPU in dieser Mischung betrug beispielsweise 30-60 Gew.-%.

Auch diese zweischichtigen Folien hatten jedoch Nachteile. Zum einen führt der zweischichtige Aufbau zu einer Zunahme der Gesamtdicke der Folie und somit zu einem Mehrbedarf an Material. Letztlich waren die Brechungsindizes der beiden Schichten in erheblichem Maße unterschiedlich, sodass es nicht möglich war, den Verschnitt der Folien wiederzuverwerten, da die Zugabe erheblicher Mengen des Mischmaterials die für das Bedrucken auf der Rückseite erforderliche Transparenz des Materials stark beeinträchtigt.

Als Stand der Technik sind im Zusammenhang mit gattungsgemäßen Oberflächenfolien die Dokumente AT 513 280 A4, AT 511 083 A4, EP 1 803 786 A1 und EP 0 936 080 A2 zu nennen.

Aufgabe der Erfindung ist es, eine Polymermischung und in weiterer Folge Oberflächenfolie bereitzustellen, mit der oben genannte Nachteile des Standes der Technik in vorteilhafter Weise überwunden werden.

Vor diesem Hintergrund betrifft die Erfindung ein Sportgerät mit einer Oberflächenfolie bestehend aus einer Kunststoffzusammensetzung oder umfassend eine erste Schicht aus einer Kunststoffzusammensetzung, wobei die Kunststoffzusammensetzung ein thermoplastisches Polyurethan (TPU), ein zweites Copolymer mit einem Maleinsäureanhydrid-Anteil und optional ein drittes Copolymer mit einem Styrol-Butadien-Anteil umfasst. Solche Kunststoffzusammensetzungen sind an sich aus der JP H02-305855 A bekannt.

Erfindungsgemäß verwendbare TPUs können aus langkettigen linearen Molekülen bestehen, die durch Polyaddition aus langkettigen und kurzkettigen Diolen sowie Diisocyanaten gebildet werden. Für die Erfindung verwendbare TPUs können sogenannte Polyester-TPUs oder Polyether-TPUs sein. Die in der Polymerkette eingebaute Weich-Phase, die auf die langkettigen Diole zurückgeht, ist relativ unpolar, während die Hart-Phase polar ist.

Durch Wahl der Rohstoffe, Reaktionsbedingungen und Mengenanteile der Rohstoffe können die physikalischen Eigenschaften der TPUs eingestellt werden. So kann die Wahl in einer bevorzugten Ausgestaltung so erfolgen, dass die eingesetzten TPUs eine Härte von 50 bis 85 und vorzugsweise von 65 bis 78 Shore D (nach DIN ISO 7619-1 (3s)) aufweisen. In einer Ausgestaltung ist eine hohe Transparenz (der Transmissionswert bei einer Schichtdicke von 3 mm sollte >80% sein) und ein niedrigen Anfangsgelbgrad gewünscht. Die TPUs werden vorzugsweise so gewählt, dass sie einen Brechungsindex n von 1,55 bis 1,585 haben (DIN EN ISO 489).

In einer Ausführungsform handelt es sich bei dem zweiten Copolymer um eines, das hauptsächlich aus Polystyrol (PS) besteht, das mit Maleinsäureanhydrid funktionalisiert wurde. Ein solcher Stoff wird Styrol-Maleinsäureanhydrid genannt (SMA). Bevorzugte Beispiele umfassen SMA Terpolymere mit einem polaren und einem apolaren Anteil in der Polymerkette. Besonders bevorzugt sind SMAs mit hoher Transparenz und möglichst gleichem Brechungsindex wie das verwendete TPU.

In einer Ausführungsform handelt es sich bei dem dritten Copolymer um eines, das aus Butadien- und Polystyrol-Blöcken besteht. Solche thermoplastischen Elastomere werden als Styrol-Butadien-Styrol Block-Copolymer (SBS) oder als Styrol-Butadien Copolymer (SBC) bezeichnet. Bevorzugt sind wiederum solche Polymere mit möglichst hoher Transparenz und möglichst gleichem Brechungsindex wie das verwendete TPU. SBS bzw. SBC ist apolar.

Das zweite Copolymer weist polare und apolare Abschnitte auf und kann so als Mittler zwischen dem TPU und dem dritten Copolymer dienen. So kann eine Phasentrennung zwischen den Polymeren unterschiedlicher Polarität vermieden werden, sodass beispielsweise die Folie bei starker Belastung nicht gespalten wird.

In einer Ausführungsform beträgt der Anteil des TPU in der Zusammensetzung 50-99 Gew.-% und vorzugsweise 70-98 Gew.-%. Der Anteil des zweiten Copolymers in der Zusammensetzung kann 1-49 Gew.-%, vorzugsweise 1-30 Gew.-% und weiter vorzugsweise 5-25 Gew.-% betragen. Der Anteil des dritten Copolymers in der Zusammensetzung kann 1-49 Gew.-% und vorzugsweise 1-25 Gew.-% betragen.

In einer Ausführungsform besteht die Kunststoffzusammensetzung aus den drei genannten Bestandteilen und ggf. bis zu 10, 5 oder 2 Gew.-% an weiteren polymeren oder nicht polymeren Zusatzstoffen. Beispiele umfassen Hilfs- und Zusatzstoffe wie beispielsweise Stabilisatoren oder Farbstoffe.

Beispielsweise sind die folgenden Massenverhältnisse in der erfindungsgemäßen Kunststoffzusammensetzung denkbar: TPU / zweites Copolymer = 99 / 1 bis 70 / 30; TPU / zweites Copolymer / drittes Copolymer = 98 / 1 / 1 bis 50 /25 /25 oder 50 / 1 /49 oder 50 / 49 / 1; TPU / drittes Copolymer = 99/1 bis 75/25.

Die Zugaben zum TPU sollten je nach Anwendung und Anforderung an die Zusammensetzung möglichst gering gehalten werden, um die vorteilhaften physikalischen Eigenschaften des TPU möglichst wenig zu beeinflussen.

In einer Ausführungsform beträgt der Unterschied der Brechungsindices des thermoplastischen Polyurethan und des zweiten und ggf. auch des dritten Copolymers nicht mehr als 0,1 und vorzugsweise nicht mehr als 0,05 beträgt.

In einer Ausführungsform weist die Folie wenigstens eine zweite Schicht auf, die vorzugsweise aus einem TPU und weiter vorzugsweise aus dem bereits in der ersten Schicht verwendeten TPU besteht. Die zweite Schicht grenzt vorzugsweise direkt an die erste Schicht.

In einer Ausführungsform haben die Folien eine Dicke von 0,05 bis 1 mm und insbesondere von 0,1 bis 0,6 mm.

Bei dem erfindungsgemäßen Sportgerät handelt es sich um einen Ski, ein Snowboard, ein Kiteboard oder ein Surfboard. Der Begriff der Skier ist hierbei breit zu verstehen und umfasst alle Arten von Skiern (Alpin, Freeride, Touren, Telemark, Langlauf, Sprung, etc.).

Sofern die Oberflächenfolie eine erste Schicht aus der erfindungsgemäßen Kunststoffzusammensetzung und eine zweite Schicht aus TPU umfasst, so ist vorzugsweise vorgesehen, dass die zweite Schicht die nach außen gerichtete Deckschicht des Sportgeräts darstellt und die erste Schicht innen liegt und an der Rückseite bedruckt ist.

Gemäß der Erfindung kann die Folie als Dekorträger dienen. Sie kann auf der Rückseite (Unterschicht) vollflächig bedruckt, teilweise bedruckt oder ohne Bedruckung verwendet werden. Die stoffschlüssige Verbindung der Folie zum Substrat bzw. der kaschierten Oberfläche des Sportgeräts kann beispielsweise durch Verkleben, Verpressen, Laminieren, Coextrusion oder Hinterspritzen hergestellt werden. Zum Erreichen einer noch verbesserten Haftung kann die Folie zuvor beispielsweise beflammt, coroniert oder mit einem Plasma behandelt werden. Diese Ausführungsformen können auch miteinander kombiniert werden.

Generell kann bei mehr- und insbesondere zweischichtigen Folien bevorzugt sein, dass die Schicht aus der Kunststoffzusammensetzung umfassend das TPU und das zweite und/oder dritte Copolymer die Unterschicht bildet und dekoriert oder verklebt wird. Diese kann aber auch als zwischenliegende oder untenliegende Schicht eingesetzt werden. Bei Bedarf, etwa bei erhöhten Anforderungen an die Kratzfestigkeit, kann die Deckschicht gegebenenfalls noch mit einer Schutzschicht versehen sein, beispielsweise mit einem Klarlack. Sie kann auch gegebenenfalls mit einer Montagefolie abgedeckt sein, die nach der Herstellung des Fertigteils abgezogen wird.

Einschichtige Folien, sowie bei mehrschichtigen Folien die untenliegende Schicht kann farblos transparent, transparent eingefärbt oder auch deckend eingefärbt sein, um spezielle Designvarianten darstellen zu können. In solchen Fällen kann die Oberseite zusätzlich bedruckt werden.

Vor dem eingangs genannten Hintergrund betrifft die Erfindung ferner ein Verfahren zur Herstellung eines erfindungsgemäßen Sportgeräts, wobei eine Folie umfassend eine Schicht aus der Kunststoffzusammensetzung umfassend das TPU und das zweite und/oder dritte Copolymer als In-Mold-Folie verwendet wird.

Weitere Einzelheiten und Vorteile der Erfindung ergeben sich aus den nachfolgend diskutierten Figuren und Ausführungsbeispielen. In den Figuren zeigen:
- Figur 1:: den Aufbau des obersten Bereichs eines Skis mit einer einschichtigen Oberflächenfolie; und
- Figur 2:: den Aufbau des obersten Bereichs eines Skis mit einer zweischichtigen Oberflächenfolie.

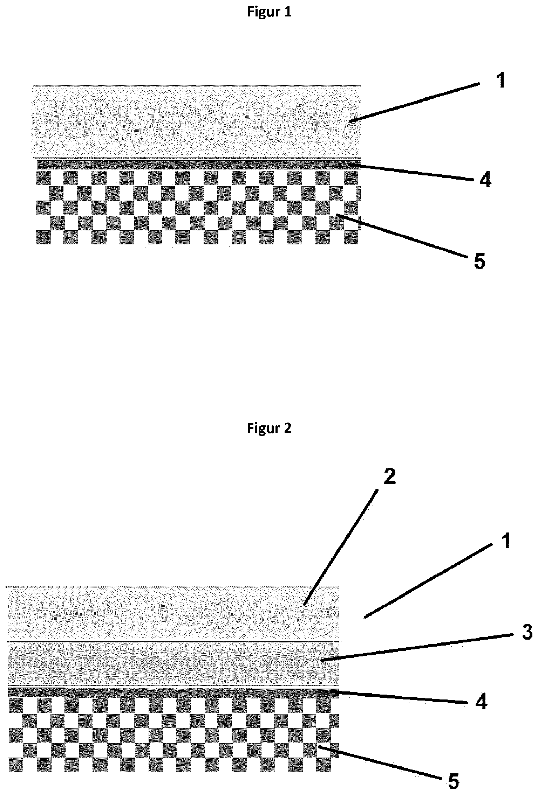

Figuren 1 und 2 zeigen den Aufbau des obersten Bereichs eines Skis mit einer transparenten Oberschicht in Form einer TPU-Oberflächenfolie 1, die entweder einschichtig (Figur 1) oder zweischichtig (Figur 2) aufgebaut sein kann. Im Falle eines zweischichtigen Aufbaus umfasst die Folie 1 eine Deckschicht 2 aus beispielsweise transparentem TPU und eine Unterschicht 3 aus beispielsweise einem transparenten TPU/M-ABS Blend. Unterhalb der Folie befindet sich eine gestaltete Schichte 4 mit einem Verguss- oder Siebdrucklack, wobei die Oberfläche der Folie zur Haftverbesserung geprimt sein kann. Darunter befindet sich der Unterbau 5 des Skis, beispielsweise der glasfaserverstärkte Prepreg und ggf. ein PU-Schaum im Falle einer geschäumten Konstruktion.

Im Stand der Technik bestand beim einschichtigen Aufbau gemäß Figur 1, wie eingangs erwähnt, das Problem, dass die TPU-Folie mit Härte über 90-95 Shore A keine ausreichende Haftung für die Schichte 4 bietet.

Diese Problem wurde bereits im Stand der Technik durch einen zweischichtigen Aufbau der Folie gelöst, wie er in Figur 2 gezeigt ist. Hier wurde die als Verschleißschicht dienende Deckschicht 2 aus einem transparente Polyether-TPU mit einer Härte von mindestens 90 Shore A oder höher gewählt. Um ferner eine ausreichende Haftung der Schichte 4 zu erreichen, wurde als Unterschicht 2 ein Blend aus TPU und M-ABS gewählt, das auch transparent ist und sich sehr gut bedrucken und verkleben lässt. Dies ist jedoch mit den eingangs genannten Nachteilen verbunden.

Die Erfindung stellt eine Zusammensetzung bereit, die eine ausreichende Haftung mit den bei der Herstellung von Skiern üblichen Lacken, Primern und Klebern aufweist. Ferner wird eine akzeptable Transparenz und eine Verringerung der erforderlichen Schichtstärke der Verschleißschicht gegenüber einer Verwendung von einem reinen TPU/M-ABS Blend erreicht. Daneben ist eine gute Witterungsbeständigkeit und eine hohe Wärmeformbeständigkeit gegeben, wobei dennoch eine ausreichende Schlagzähigkeit insbesondere auch bei tiefen Temperaturen erreicht wird.

### Vergleichsbeispiel 1:

Es wurde ein transparentes TPU mit Shore Härte D von 77 Shore D (Elastollan© 1278 D11, Firma BASF) eingesetzt. Hieraus wurde eine einschichtige Folie in Stärke 0,5 mm bei Extrusionstemperaturen von 180 - 240 °C hergestellt.

### Vergleichsbeispiel 2:

Es wurde eine zweischichtige Folie extrudiert mit einer Schichtverteilung von 60 Teilen in der Oberschicht und 40 Teilen in der Unterschicht. In der Oberschicht wird das gleiche TPU verwendet wie in Vergleichsbeispiel 1. Die Unterschicht besteht aus einem Blend aus M-ABS und einem 90 Shore A Ether TPU. Das M-ABS hat einen ähnlichen Brechungsindex wie das verwendetet TPU der Unterschicht. Die Masseverhältnisse der beiden Blend-Komponenten sind 60 Teile M-ABS zu 40 Teile TPU. Die Folie wurde in Dicke 0,5 mm extrudiert.

### Beispiel A:

Es wurde eine einschichte Folie des TPU aus Vergleichsbeispiel 1 extrudiert, wobei 5 Gew.-% eines SMA (Xiran© SZ 26120, Firma Polyscope) und 30 Gew.-% Mahlgut einer Folie desselben Typs (d.h., Beispiel A) eincompoundiert wurden. Hieraus wurde ein 0,5 mm dicke Folie extrudiert.

### Beispiel B:

Es wurde eine zweischichtige Folie extrudiert mit einer Schichtverteilung von 50 Teilen in der Oberschicht und 50 Teilen in der Unterschicht. In der Oberschicht wurde das gleiche TPU verwendet wie in Vergleichsbeispiel 1. Die Unterschicht besteht zum Hauptteil aus dem gleichen TPU wie die Oberschicht jedoch mit 4 Gew.-% eines SMA (Xeran© H22, Firma Polyscope), 8 Gew.-% eines SBC (Styrolux© 656C, Firma INEOS Styrolution) und 30 Gew.-% Mahlgut derselben Folie (d.h., der Folie des Beispiels B.). Die Gesamtdicke der extrudierten Folie war 0,5 mm.

### Beispiel C:

Es wurde ein einschichtige Folie extrudiert mit TPU mit Shore Härte 75 D (Estane© ETE 75DT, Firma Lubrizol), wobei 4 Gew.-% eines SMA (Xeran© H22, Firma Polyscope), 8 Gew.-% SBC (Styrolux © 684D, Firma INEOS Styrolution) und 30 Gew.-% Mahlgut dieser Folie (Beispiel C) zugegeben wurden. Diese Folie wurde in einer Dicke von 0,5 mm extrudiert.

Die Messwerte der Folien werden in den untenstehenden Tabellen 1 und 2 wiedergegeben.

**Tabelle 1:**

| **Beispiel #** | **Haftung*** | **Transparenz**** | **UV-Stabilität***** | **Weißbruch** |
|---|---|---|---|---|
| **1** | 1,5 N/mm | gut | ok | kein |
| **2** | 4 N/mm | mittel | ok | mittel |
| **A** | 12 N/mm | gut | ok | mittel |
| **B** | 16 N/mm | gut | ok | wenig |
| **C** | 16 N/mm | gut | ok | wenig |

| | | | | |
|---|---|---|---|---|
| * Bedruckt (Siebdruck) und verklebt mit 2K Epoxy ** Transparenz für Anwendung als Skioberflächenfolie *** UV-Tests mit ATLAS Suntest XLS+ bei max 60° im Probenraum und einer Bestrahlungsstärke von 550 W/m² und einer Bestrahlungszeit von 72h bei einem dem Sonnenlicht ähnlichen Lichtspektrum | | | | |

**Tabelle 2:**

| **Beispiel #** | **Streckspannung* [MPa]** | **Bruchdehnung* [%]** | **E-Modul** [MPa]** |
|---|---|---|---|
| **1** | 43,34 | 393,12 | 1017,16 |
| **2** | 30,37 | 412,43 | 765,74 |
| **A** | 42,68 | 363,97 | 1020,91 |
| **B** | 42,98 | 399,29 | 1043,14 |
| **C** | 37,07 | 462,00 | 933,75 |

| | | | |
|---|---|---|---|
| * DIN 53504 ** DIN 53457 | | | |

## Patentansprüche

1. Sportgerät mit einer Oberflächenfolie bestehend aus einer Kunststoffzusammensetzung oder umfassend eine erste Schicht aus einer Kunststoffzusammensetzung, wobei die Kunststoffzusammensetzung ein thermoplastisches Polyurethan, ein zweites Copolymer mit einem Maleinsäureanhydrid-Anteil und optional ein drittes Copolymer mit einem Styrol-Butadien-Anteil umfasst, wobei es sich bei dem Sportgerät um einen Ski, ein Snowboard, ein Kiteboard oder ein Surfboard handelt.

2. Sportgerät nach Anspruch 1, **dadurch gekennzeichnet, dass** das thermoplastische Polyurethan eine Shore D Härte von 50-85 und vorzugsweise von 65-78 und/oder einen Brechungsindex von 1,55-1,585 aufweist.

3. Sportgerät nach einem der vorhergehenden Ansprüche, **dadurch gekennzeichnet, dass** es sich bei dem zweiten Copolymer um Styrol-Maleinsäureanhydrid-Copolymer handelt.

4. Sportgerät nach einem der vorhergehenden Ansprüche, **dadurch gekennzeichnet, dass** es sich bei dem dritten Copolymer um Styrol-Butadien-Styrol Blockcopolymer handelt.

5. Sportgerät nach einem der vorhergehenden Ansprüche, **dadurch gekennzeichnet, dass** der Anteil des thermoplastischen Polyurethans in der Zusammensetzung 50-99 Gew.-% und vorzugsweise 70-98 Gew.-% beträgt und/oder dass der Anteil des zweiten Copolymers in der Zusammensetzung 1-49 Gew.-%, vorzugsweise 1-30 Gew.-% und weiter vorzugsweise 5-25 Gew.-% beträgt und/oder dass der Anteil des dritten Copolymers in der Zusammensetzung 1-49 Gew.-% und vorzugsweise 1-25 Gew.-% beträgt.

6. Sportgerät nach einem der vorhergehenden Ansprüche, **dadurch gekennzeichnet, dass** der Unterschied der Brechungsindices des thermoplastischen Polyurethan und des zweiten und ggf. auch des dritten Copolymers nicht mehr als 0,1 und vorzugsweise nicht mehr als 0,05 beträgt.

7. Sportgerät nach einem der vorhergehenden Ansprüche, **dadurch gekennzeichnet, dass** die Folie wenigstens eine zweite Schicht aufweist, die vorzugsweise aus einem thermoplastischen Polyurethan und weiter vorzugsweise aus dem in der Kunststoffzusammensetzung verwendeten thermoplastischen Polyurethan besteht.

8. Verfahren zur Herstellung eines Sportgeräts nach einem der vorhergehenden Ansprüche, **dadurch gekennzeichnet, dass** eine Folie bestehend aus der Kunststoffzusammensetzung oder umfassend eine erste Schicht aus der derartigen Kunststoffzusammensetzung als In-Mould-Folie verwendet wird.

## Claims

1. A sports device with a surface film consisting of a plastic composition or comprising a first layer of a plastic composition, wherein the plastic composition comprises a thermoplastic polyurethane, a second copolymer with a maleic anhydride fraction, and optionally a third copolymer with a styrene-butadiene fraction, wherein the sports device is a ski, a snowboard, a kiteboard or a surfboard.

2. The sports device according to claim 1, **characterized in that** the thermoplastic polyurethane has a Shore D hardness of 50-85 and preferably of 65-78 and/or an index of refraction of 1.55-1.585.

3. The sports device according to any of the preceding claims, **characterized in that** the second copolymer is a styrene-maleic anhydride copolymer.

4. The sports device according to any of the preceding claims, **characterized in that** the third copolymer is a styrene-butadiene-styrene block copolymer.

5. The sports device according to any of the preceding claims, **characterized in that** the fraction of the thermoplastic polyurethane in the composition is 50-99 wt-% and preferably 70-98 wt-% and/or that the fraction of the second copolymer in the composition is 1-49 wt-%, preferably 1-30 wt-% and more preferably 5-25 wt-% and/or that the fraction of the third copolymer in the composition is 1-49 wt-% and preferably 1-25 wt-%.

6. The sports device according to any of the preceding claims, **characterized in that** the difference of the indices of refraction of the thermoplastic polyurethane and of the second and possibly also of the third copolymer is not more than 0.1 and preferably not more than 0.05.

7. The sports device according to any of the preceding claims, **characterized in that** the film includes at least one second layer which preferably consists of a thermoplastic polyurethane and more preferably of the thermoplastic polyurethane used in the plastic composition.

8. A method for manufacturing a sports device according to any of the preceding claims, **characterized in that** a film consisting of the plastic composition or comprising a first layer of such plastic composition is used as an in-mould film.

## Revendications

1. Equipement sportif avec une feuille de surface constituée par une composition de matière plastique ou comportant une première couche d'une composition de matière plastique, la composition de matière plastique comportant un polyuréthane thermoplastique, un deuxième copolymère avec une fraction anhydride maléique et optionnellement un troisième copolymère avec une fraction styrène-butadiène, dans lequel l'équipement sportif est un ski, un snowboard, un kiteboard ou une planche de surf.

2. Equipement sportif selon la revendication 1, **caractérisé en ce que** le polyuréthane thermoplastique possède une dureté Shore D de 50-85 et de préférence de 65-78 et/ou un indice de réfraction de 1,55-1,585.

3. Equipement sportif selon l'une quelconque des revendications précédentes, **caractérisé en ce que** le deuxième copolymère est un copolymère styrène-anhydride maléique.

4. Equipement sportif selon l'une quelconque des revendications précédentes, **caractérisé en ce que** le troisième copolymère est in copolymère séquencé styrène-butadiène-styrène.

5. Equipement sportif selon l'une quelconque des revendications précédentes, **caractérisé en ce que** la fraction du polyuréthane thermoplastique dans la composition représente 50-99% en poids et de préférence 70-98% en poids et/ou que la fraction du deuxième copolymère dans la composition représente 1-49% en poids, de préférence 1-30% en poids et mieux encore 5-25% en poids et/ou que la fraction du troisième copolymère dans la composition représente 1-49% en poids et de préférence 1-25% en poids.

6. Equipement sportif selon l'une quelconque des revendications précédentes, **caractérisé en ce que** la différence des indices de réfraction du polyuréthane thermoplastique et du deuxième et éventuellement aussi du troisième copolymère ne représente pas plus de 0,1 et de préférence pas plus de 0,05.

7. Equipement sportif selon l'une quelconque des revendications précédentes, **caractérisé en ce que** la feuille comprend au moins une deuxième couche, qui de préférence est constituée d'un polyuréthane thermoplastique et mieux encore du polyuréthane thermoplastique utilisé dans la composition de matière plastique.

8. Procédé de fabrication d'un équipement sportif selon l'une quelconque des revendications précédentes, **caractérisé en ce qu'**une feuille constituée par la composition de matière plastique ou comportant une première couche de ladite composition de matière plastique est utilisée comme feuille dans la moule.
